# EUROPEAN PATENT APPLICATION

(11) **EP 3 460 634 A1**
(43) Date of publication of application: **27.03.2019**
(21) Application number: 18186886.0
(22) Date of filing: 01.08.2018
(51) Int. Cl.: G06F 3/01, G02B 27/01

(54) **METHOD AND DEVICE FOR DISPLAYING AN INPUT INTERFACE AND AN ELECTRONIC DEVICE**

(30) Priority: 25.09.2017 CN 201710873744
(71) Applicant: Beijing Xiaomi Mobile Software Co., Ltd., Beijing 100085 (CN)
(72) Inventor: LIN, Xingsheng, Beijing, Beijing 100085 (CN)
(74) Representative: dompatent von Kreisler Selting Werner - Partnerschaft von Patent- und Rechtsanwälten mbB

(57) **Abstract**

The present disclosure relates to a method and device for displaying an input interface and an electronic device. The method includes: determining (S101), when a control instruction for opening a target application is received, whether there is a mobile device within a photographing range of a camera; determining (S102), when it is determined that there is a mobile device in the photographing range, an input interface corresponding to the target application; and displaying (S103) the input interface on the mobile device.

## Description

### TECHNICAL FIELD

The present disclosure relates to the field of computer technology, and more particularly to a method and device for displaying an input interface and an electronic device.

### BACKGROUND

In Augmented Reality (AR) technology, a speech recognition input scheme is commonly used. However, when speech recognition input is used by a user in a public place, it may affect others and the user's privacy may be leaked. In addition, it may be easily influenced by noise, thereby causing mistakes in input information identification, and thus accuracy of information input may be reduced and the user's experience may be affected.

### SUMMARY

According to a first aspect of embodiments of the present disclosure, there is provided a method for displaying an input interface. The method may include: determining, when a control instruction for opening a target application is received, whether there is a mobile device within a photographing range of a camera; determining, when it is determined that there is a mobile device in the photographing range, an input interface corresponding to the target application; and displaying the input interface on the mobile device, wherein information input into the input interface is transferred or transmitted to the target application.

In some embodiments, the determining the input interface corresponding to the target application may include: determining type of the target application; and determining an input interface corresponding to the type of the target application by querying pre-stored correspondence data, wherein the correspondence data is data representing a correspondence between application types and input interfaces.

In some embodiments, the method may further include: determining whether the mobile device is in a screen-unlocked state; and performing, when it is determined that the mobile device is in the screen-unlocked state, an operation of displaying the input interface on the mobile device.

In some embodiments, the method may further include: unlocking, when it is determined that the mobile device is in a screen-locked state, the mobile device; and unlocking, when it is determined that the mobile device is in a screen-locked state, the mobile device.

In some embodiments, the displaying the input interface on the mobile device may include: determining, when a trigger instruction for triggering display of the input interface is received, a display area on the mobile device for displaying the input interface according to a trigger position of the trigger instruction; and displaying the input interface in the display area.

According to a second aspect of embodiments of the present disclosure, there is provided a device for displaying an input interface. The device may include: a device detection module configured to determine, when a control instruction for opening a target application is received, whether there is a mobile device within a photographing range of a camera; an interface determination module configured to determine, when it is determined that there is a mobile device in the photographing range, an input interface corresponding to the target application; and an interface display module configured to instruct the mobile device to display the input interface on the mobile device. Thereby, the device detection module, the interface determination module, and the interface display module might be part of the Augmented Reality device or the mobile device, wherein each of the aforementioned modules are configured to interchange data in order to provide their respective functionality. Thus, by inputting information into the input interface on the mobile device, this information can be transferred to the target application.

In some embodiments, the interface determining module may include: a type determination unit configured to determine type of the target application; and an interface determination unit configured to determine an input interface corresponding to the type of the target application by querying pre-stored correspondence data, wherein the correspondence data includes data representing a correspondence between application types and input interfaces.

In some embodiments, the device may further include: a status determination module configured to determine whether the mobile device is in a screen-unlocked state; and the interface display module is further configured to performing, when it is determined that the mobile device is in the screen-unlocked state, an operation of displaying the input interface on the mobile device.

In some embodiments, the interface display module may be further configured to unlock, when it is determined that the mobile device is in a screen-locked state, the mobile device, and perform the operation of displaying the input interface on the mobile device.

In some embodiments, the interface display module may include: an area determination unit configured to determining, when a trigger instruction for triggering display of the input interface is received, a display area on the mobile device for displaying the input interface according to a trigger position of the trigger instruction; and an area determination unit configured to determining, when a trigger instruction for triggering display of the input interface is received, a display area on the mobile device for displaying the input interface according to a trigger position of the trigger instruction.

According to a third aspect of embodiments of the present disclosure, there is provided an electronic device. The electronic device may include: a processor; a memory configured to store processor-executable instructions. The processor is configured to perform a method for displaying an input interface, the method includes: determining, when a control instruction for opening a target application is received, whether there is a mobile device within a photographing range of a camera; determining, when it is determined that there is a mobile device in the photographing range, an input interface corresponding to the target application; and instructing the mobile terminal to display the input interface on the mobile device.

According to a fourth aspect of embodiments of the present disclosure, there is provided a computer-readable storage medium configured to store processor-executable instructions. The processor-executable instructions cause a processor to perform acts including: determining, when a control instruction for opening a target application is received, whether there is a mobile device within a photographing range of a camera; determining, when a control instruction for opening a target application is received, whether there is a mobile device within a photographing range of a camera; and instructing the mobile terminal device to display the input interface on the mobile device.

The technical solutions provided in embodiments of the present disclosure may include the following beneficial effects.

It can be seen from the foregoing embodiments that it is possible for the present disclosure, by determining, upon a control instruction for opening a target application is received, whether there is a mobile device in the photographing range of a camera, so as to determine an input interface corresponding to the target application for displaying on the mobile device, to input information via the input interface with higher accuracy and thus a user's experience can be improved, and furthermore, to avoid information identification error caused by noise interference so as to ensure privacy of the user is not leaked, as compared with a method via voice input in the related art.

It is to be understood that both the foregoing general descriptions and the following detailed descriptions are exemplary and explanatory only and do not limit the scope of the disclosure.

### BRIEF DESCRIPTION OF THE DRAWINGS

The drawings herein are incorporated in and constitute a part of this specification, showing embodiments consistent with the present disclosure, and together with the descriptions, serve to explain the principles of the present disclosure.
Fig. 1A is a flow chart illustrating a method for displaying an input interface according to some exemplary embodiments.
Fig. 1B is a diagram of an application scenario of a method for displaying an input interface according to some exemplary embodiments.
Fig. 2 is a flow chart of another method for displaying an input interface according to some exemplary embodiments.
Fig. 3 is a flow chart of still another method for displaying an input interface according to some exemplary embodiments;
Fig. 4 is a flow chart of yet another method for displaying an input interface according to some exemplary embodiments.
Fig. 5 is a block diagram of a device for displaying an input interface according to some exemplary embodiments.
Fig. 6 is a block diagram of another device for displaying an input interface according to some exemplary embodiments;
Fig. 7 is a block diagram of an electronic device according to some exemplary embodiments.

### DETAILED DESCRIPTION

Hereinafter, exemplary embodiments will be described in detail, examples of which are shown in the drawings. In the following descriptions when referring to the drawings, the same numerals in the different drawings denote the same or similar elements unless otherwise indicated. The embodiments described in the following exemplary embodiments are not representative of all embodiments consistent with the present disclosure. Rather, they are merely examples of devices and methods consistent with some aspects of the present disclosure as detailed in the appended claims.

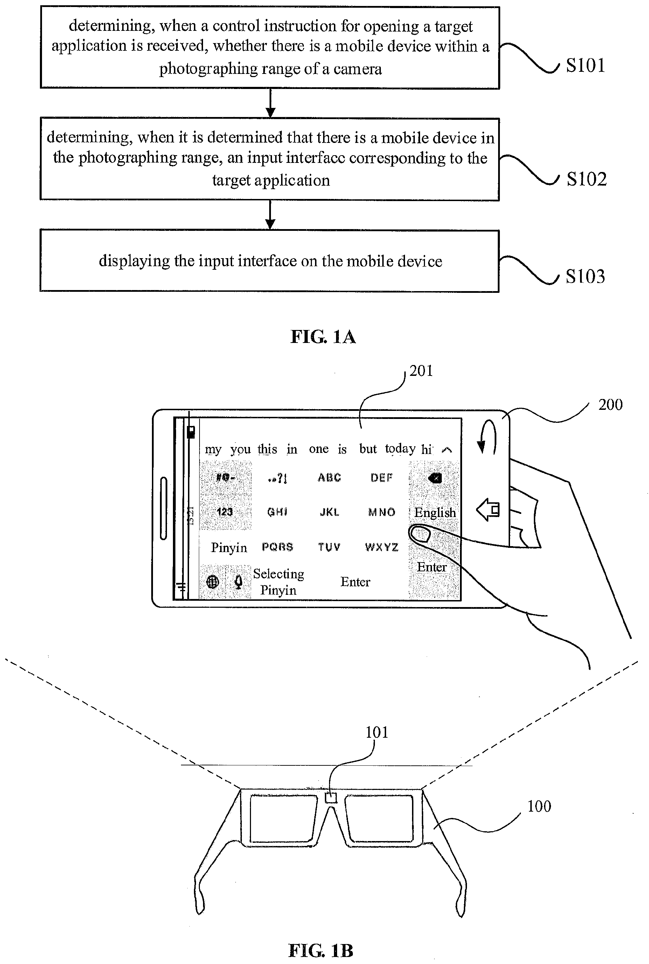

Fig. 1A is a flow chart illustrating a method for displaying an input interface according to some exemplary embodiments. Fig. 1B is a diagram illustrating an application scenario of a method for displaying an input interface according to some exemplary embodiments. The embodiment is applicable to an Augmented Reality (AR) device, such as AR glasses, AR helmets and the like. As shown in Fig. 1A, the method may include at least the following steps S101-S103.

In S101, when a control instruction for opening a target application is received, a determination as to whether there is a mobile device within a photographing range of a camera is made.

In some embodiments, the control instruction may include an instruction for a user to open a target application by clicking a predetermined location or button on the AR device or by using voice input.

For example, as shown in Fig. 1B, after receiving the control instruction, the AR device 100 determines whether there is a mobile device 200 within a photographing range of the camera 101.

Here, the AR device may acquire a current image by using a camera and read a pre-stored reference image including a mobile terminal. The reference image may be an image including a mobile terminal, or an image including a mobile terminal identifier, or an image including standard size of a mobile terminal. The AR device then matches the current image and the reference image; and determines, if a matching degree between the current image and the reference image exceeds a preset value, that a mobile terminal exists in the acquired image.

In some embodiments, the target application may be an application pre-installed in a mobile device, including but not limited to an instant messaging software (e.g., WeChat), a text reading software, a video playing software, various types of game software, and the like. The mobile device is a device (such as a user's mobile phone, a PC, or other terminals with a display screen) associated with the AR device, in the sense that information can be shared between the AR device and the terminal.

In S102, when it is determined that there is a mobile device in the photographing range, an input interface corresponding to the target application is determined.

In some embodiments, after determining that the mobile device exists in the photographing range of the camera, the AR device determines an input interface corresponding to the target application.

For example, in the case that the target application opened in the current AR device is an instant messaging (IM) software such as WeChat that requires information is inputted through a virtual keyboard interface, the corresponding input interface may be a virtual keyboard interface; in the case that the target application is a text reading software that requires information is inputted via a reading control interface, the corresponding input interface may be a reading control interface; in the case that the target application is video playing software that requires information is inputted through a playing control interface, the corresponding input interface may be a playing control interface; in the case that the target application is game software that requires information is inputted through a game control interface, the corresponding input interface may be a game control interface.

In S103, the input interface is displayed on the mobile device.

In an embodiment, after the AR device determines the input interface corresponding to the target application, the determined input interface (see Fig. 1B) can be displayed on the mobile device, such that the user may input corresponding information based on the displayed input interface (for example, IM content in the conversation interface of a messaging application).

It can be seen from the above descriptions that it is possible for the present embodiment, by querying a pre-stored correspondence data to determine an input interface corresponding to the type of the target application, to display a different input interface for a different application type, by which intelligence of the input interface display can be enhanced and thus the user's experience can be improved.

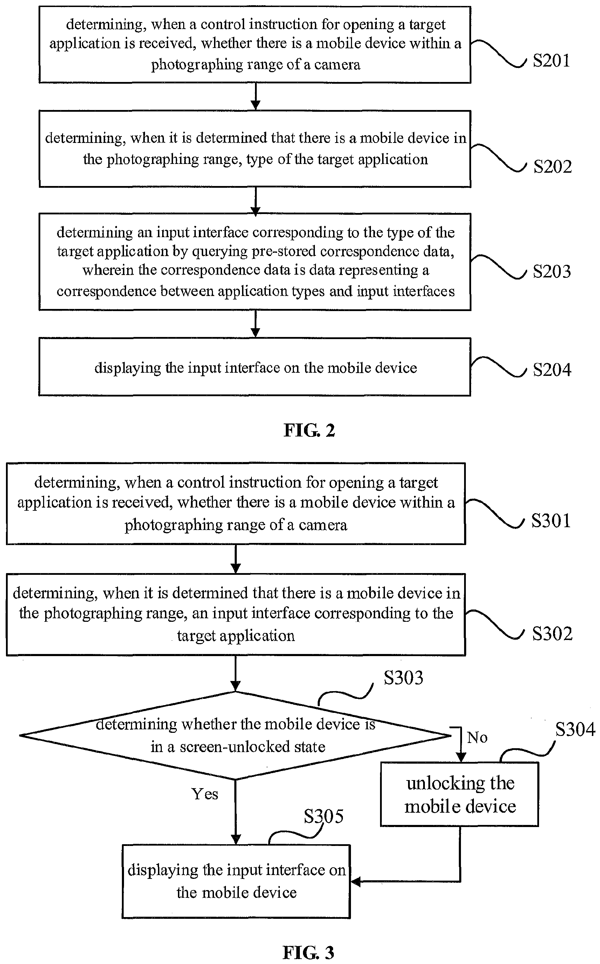

Fig. 2 is a flow chart of another method for displaying input interface according to an exemplary embodiment. As shown in Fig. 2, the method may include at least the following steps S201-S204.

In S201, when a control instruction for opening a target application is received, a determination as to whether there is a mobile device within a photographing range of a camera is made.

In S202, when it is determined that a mobile device exists in the photographing range, type of the target application is determined.

In some embodiments, after it is determined that a mobile device exists in the photographing range of the camera, the AR device determines type of the target application.

Here, the type of the target application includes, but is not limited to, an instant messaging type, a text reading type, a video play type, a game type and the like.

In S203, an input interface corresponding to the type of the target application is determined by querying pre-stored correspondence data, wherein the correspondence data includes data representing a correspondence between application types and input interfaces.

In some embodiments, the AR device previously stores the correspondence data that represents correspondence between application types and input interfaces.

In some embodiments, the correspondence data pre-stored in the AR device may include that as shown in Table 1 below:

**Table 1: correspondence between application types and input interfaces**

| Application type | Instant communication | Text reading | Video play | game |
|---|---|---|---|---|
| Input interface | Virtual keyboard | Reading control interface | Play control interface | Game control interface |

In some embodiments, after the AR device determines type of the target application (for example, the text reading type), the table 1 may be queried to determine an input interface (i.e., a reading control interface) corresponding to the type of the target application.

In S204: the input interface is displayed on the mobile device.

The steps S201 and S204 are the same as the steps S101 and S103 in the embodiment shown in Fig. 1A, and thus will not be described herein again.

It can be seen from the above technical solution that it is possible for the present embodiment, by determining, upon a control instruction for opening a target application is received, whether there is a mobile device in the photographing range of a camera, so as to determine an input interface corresponding to the target application for displaying on the mobile device, to input information via the input interface with higher accuracy and thus a user's experience can be improved. Furthermore, the method avoids information identification error caused by noise interference so as to ensure privacy of the user is not leaked, as compared with a method via voice input in the related art.

Fig. 3 is a flowchart of still another method for displaying an input interface according to some exemplary embodiments. As shown in Fig. 3, the method may include at least the following steps S301-S305.

In S301, when a control instruction for opening a target application is received, a determination as to whether there is a mobile device within a photographing range of a camera is made.

In S302, when it is determined that there is a mobile device in the photographing range, an input interface corresponding to the target application is determined.

In S303, a determination as to whether the mobile device is in a screen-unlocked state is made.

In some embodiments, color of an area where the mobile terminal is located in an image captured by the camera may be detected, and based on the color, whether the mobile terminal is in a screen-unlocked state may be determined.

For example, when it is determined according to the color that the mobile terminal is in a black screen state, the mobile device is determined to be in a screen-locked state. When it is determined according to the color that the mobile terminal is in a bright screen state, contents displayed in the display screen of the mobile terminal can be detected. When the contents include a specified content, such as "Please unlock", "Whether to unlock", "Sliding left or right to unlock" or "Please enter password" and so on, it can be determined the display screen is in the screen-locked state; otherwise, it is determined that the mobile device is in the screen-unlocked state.

In S304, when it is determined that the mobile device is in a screen-locked state, the mobile device is unlocked and the operation of displaying the input interface on the mobile device is performed.

In some embodiments, when it is determined that the mobile device is in the screen-locked state, a preset instruction may be sent to the mobile terminal so as to control the mobile terminal to unlock the display screen, so that the operation of displaying the input interface on the mobile device is performed under the screen-unlocked state of the mobile terminal.

In S305, when it is determined that the mobile device is in the screen-unlocked state, the operation of displaying the input interface on the mobile device is performed.

In some embodiments, when it is determined that the mobile device is in the screen-unlocked state, the operation of displaying the input interface on the mobile device may be performed under the screen-unlocked state of the mobile device.

The steps S301 and S302 are the same as the steps S101 and S102 in the embodiment shown in Fig. 1A and thus are not described herein again.

Additionally or alternatively, when the mobile device is in the screen-locked state, the operation of displaying the input interface on the mobile device may also be performed.

It can be seen from the foregoing descriptions that it is possible for the present embodiment, by determining state of the mobile device and displaying the input interface on the mobile device according to the state of the mobile device, to enhance intelligence of the input interface display and thus the user's experience can be improved.

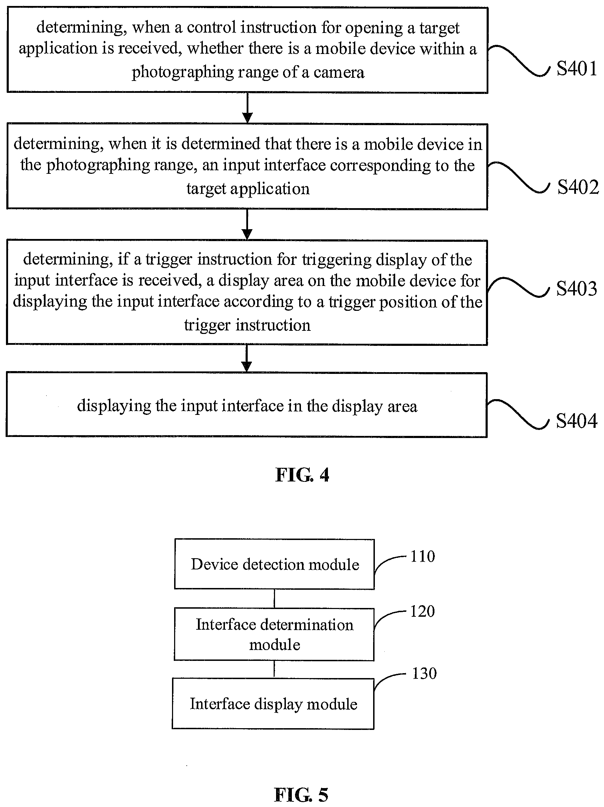

Fig. 4 is a flowchart of yet another method for displaying an input interface according to an exemplary embodiment. As shown in Fig. 4, the method may include at least the following steps S401-S405.

In S401, when a control instruction for opening a target application is received, a determination as to whether there is a mobile device within a photographing range of a camera is made.

In S402, when it is determined that there is a mobile device in the photographing range, an input interface corresponding to the target application is determined.

In S403, when a trigger instruction for triggering display of the input interface is received, a display area on the mobile device for displaying the input interface is determined according to a trigger position of the trigger instruction.

In some embodiments, after the input interface corresponding to the target application is determined, a determination as to whether a trigger instruction for triggering display of the input interface is received is made. If the trigger instruction is received, a trigger position of the trigger instruction is determined. According to the trigger position of the trigger instruction, a display area for displaying the input interface on the mobile device is determined.

In some embodiments, the trigger instruction may be an instruction triggered by the user's finger pressing in a screen-unlocking interface for a certain time period. The embodiments of the present disclosure do not limit a specific form of the trigger instruction.

In some embodiments, when an instruction triggered by the user's finger clicking on the screen-unlocking interface is received, a position where the finger clicks may be determined as the trigger position of the trigger instruction.

In some embodiments, after the trigger position of the trigger instruction is determined, the trigger position may be taken as a center to determine a rectangular display area with a preset length and width.

In S404, the input interface is displayed in the display area.

In an embodiment, the input interface is displayed in the display area determined in step S403.

The steps S401 and S402 are the same as the steps S101 and S102 in the embodiment shown in Fig. 1A, and thus are not described herein again.

It can be seen from the forgoing description that it is possible for the present embodiment, by determining, upon reception of a trigger instruction for triggering display of an input interface, a display area on the mobile device according to a trigger position of the trigger instruction and displaying the input interface in the display area, to display an input interface at a position specified by a user and thus intelligence of the input interface can be enhanced and the user's experience can be improved.

Fig. 5 is a block diagram of a device for displaying an input interface according to some exemplary embodiments. As shown in Fig. 5, the device includes a device detection module 110, an interface determination module 120, and an interface display module 130.

The device detection module 110 is configured to determine, when a control instruction for opening a target application is received, whether there is a mobile device within a photographing range of a camera.

The interface determination module 120 is configured to determine, when it is determined that there is a mobile device in the photographing range, an input interface corresponding to the target application.

The interface display module 130 is configured to instruct the mobile device to display the input interface on the mobile device.

It can be seen from the foregoing descriptions that it is possible for the present embodiment, by determining, upon a control instruction for opening a target application is received, whether there is a mobile device in the photographing range of a camera, so as to determine an input interface corresponding to the target application for displaying on the mobile device, to input information via the input interface with higher accuracy and thus a user's experience can be improved. Furthermore, the method avoids information identification error caused by noise interference so as to ensure privacy of the user is not leaked, as compared with a method via voice input in the related art.

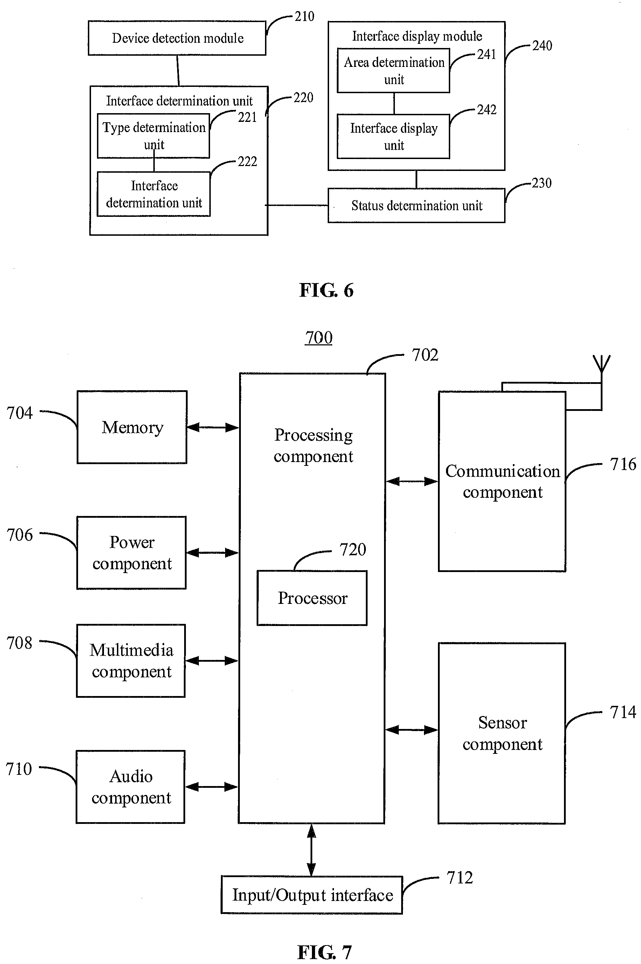

Fig. 6 is a block diagram of another device for displaying an input interface according to some exemplary embodiments. The device detection module 210, the interface determination module 220, and the interface display module 240 are similar to the device detection module 110, the interface determination module 120 and the interface display module 130 in the embodiment shown in Fig. 5, and thus are not described herein again. As shown in Fig. 6, the interface determination module 220 may further include: a type determination unit 221 configured to determine type of the target application; and an interface determination unit 222 configured to determine an input interface corresponding to the type of the target application by querying pre-stored correspondence data, where the correspondence data includes data representing a correspondence between application types and input interfaces.

In some embodiments, the device may further include: a status determination module 230 configured to determine whether the mobile device is in a screen-unlocked state, and the interface display module 240 is further configured to performing, when it is determined that the mobile device is in the screen-unlocked state, an operation of displaying the input interface on the mobile device.

In some embodiments, the interface display module 240 may be further configured to unlock, when it is determined that the mobile device is in a screen-locked state, the mobile device, and perform the operation of displaying the input interface on the mobile device.

In some embodiments, the interface display module 240 may further include: an area determination unit 241 configured to determining, when a trigger instruction for triggering display of the input interface is received, a display area on the mobile device for displaying the input interface according to a trigger position of the trigger instruction; and an interface display unit 242 configured to display the input interface in the display area.

The various modules in the device according to the foregoing embodiments perform operations in the same way as those discussed in the method embodiments, and thus will not be elaborated herein.

Fig. 7 is a block diagram of an electronic device according to some exemplary embodiments. As shown in Fig. 7, the device 700 may be a mobile phone, a computer, a digital broadcast terminal, a messaging device, a gaming console, a tablet, a medical device, an exercise equipment, a personal digital assistant, and the like.

By reference to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swiping action, but also sense a period of time and a pressure associated with the touch or swiping action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the mobile terminal 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the mobile terminal 700. For instance, the sensor component 714 may detect an open/closed status of the device 700, relative positioning of components, e.g., the display and the keypad, of the device 700. The sensor component 714 may further detect a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. For example, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some exemplary embodiments, the device700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components.

In some exemplary embodiments, there is also provided a non-transitory computer-readable storage medium including instructions, such as included in the memory 704, executable by the processor 720 in the device 700. For example, the non-transitory computer-readable storage medium may be a ROM, a RAM, a CD-ROM, a magnetic tape, a floppy disc, an optical data storage device, and the like.

A person skilled in the art, when considering the descriptions and practicing the present disclosure, will easily conceive other implementations of the present disclosure. The present application is intended to cover any variation, use or adaptation of the disclosure, which follow general principle of the disclosure and include general knowledge or customary technical means in the related art that are not discussed herein. The descriptions and embodiments are only regarded to be exemplary, and real scope of the disclosure are indicated by the following claims.

It should be understood that the present disclosure is not limited to the precise structure described above and shown in the drawings, and can be modified and changed without going beyond its scope. The scope of the present disclosure is limited only by the appended claims.

## Claims

1. A method for enabling an input interface on a mobile device associated with an AR device (100), **characterized by** comprising:
determining (S101, S201, S301, S401), when a control instruction for opening a target application is received, whether there is a mobile device within a photographing range of a camera of the AR device;
determining (S102, S402), when it is determined that there is a mobile device in the photographing range, an input interface corresponding to the target application; and
displaying (S103) the input interface on the mobile device.

2. The method according to claim 1, wherein determining the input interface corresponding to the target application comprises:
determining (S202, S302) type of the target application; and
determining (S203) an input interface corresponding to the type of the target application by querying pre-stored correspondence data, wherein the correspondence data includes data representing a correspondence between application types and input interfaces.

3. The method according to claim 1, further comprising:
determining (S303) whether the mobile device is in a screen-unlocked state; and
performing (S305), when it is determined that the mobile device is in the screen-unlocked state, an operation of displaying the input interface on the mobile device.

4. The method according to claim 3, further comprising:
unlocking (S304), when it is determined that the mobile device is in a screen-locked state, the mobile device; and
performing (S305) the operation of displaying the input interface on the mobile device.

5. The method according to claim 1, wherein displaying the input interface on the mobile device comprises:
Determining (S403), when a trigger instruction for triggering display of the input interface is received, a display area on the mobile device for displaying the input interface according to a trigger position of the trigger instruction; and
Displaying (S404) the input interface in the display area.

6. An Augmented Reality (AR) device for displaying an input interface on a mobile device associated with the AR device (100), comprising:
a device detection module (110, 210) configured to determine, when a control instruction for opening a target application is received, whether there is a mobile device within a photographing range of a camera;
an interface determination module (120, 220) configured to determine, when it is determined that there is a mobile device in the photographing range, an input interface corresponding to the target application; and
an interface display module (130) configured to instruct the mobile device to display the input interface on the mobile device.

7. The device according to claim 6, wherein the interface determining module comprises:
a type determination unit (221) configured to determine type of the target application; and
an interface determination unit (222) configured to determine an input interface corresponding to the type of the target application by querying pre-stored correspondence data, wherein the correspondence data includes data representing a correspondence between application types and input interfaces.

8. The device according to claim 6, further comprising:
a status determination module (230) configured to determine whether the mobile device is in a screen-unlocked state; and
the interface display module (240) is further configured to performing, when it is determined that the mobile device is in the screen-unlocked state, an operation of displaying the input interface on the mobile device.

9. The device according to claim 8, wherein the interface display module (240) is further configured to unlock, when it is determined that the mobile device is in a screen-locked state, the mobile device, and perform the operation of displaying the input interface on the mobile device.

10. The device according to claim 6, wherein the interface display module comprises:
an area determination unit (241) configured to determining, when a trigger instruction for triggering display of the input interface is received, a display area on the mobile device for displaying the input interface according to a trigger position of the trigger instruction; and
an interface display unit (242) configured to display the input interface in the display area.

11. An electronic device, comprising:
a processor (720);
a memory (704) configured to store processor-executable instructions;
wherein the processor (720) is configured to perform a method for displaying an input interface, the method comprises:
determining, when a control instruction for opening a target application is received, whether there is a mobile device within a photographing range of a camera of an AR device;
determining, when it is determined that there is a mobile device in the photographing range, an input interface corresponding to the target application; and
instructing the mobile device to display the input interface on the mobile device.

12. A computer-readable storage medium having a computer program stored thereon, the program being executed by a processor to:
determining, when a control instruction for opening a target application is received, whether there is a mobile device within a photographing range of a camera of an AR device;
determining, when it is determined that there is a mobile device in the photographing range, an input interface corresponding to the target application; and
instructing the mobile device to display the input interface on the mobile device.
